# EUROPEAN PATENT APPLICATION

(11) **EP 4 819 466 A1**
(43) Date of publication of application: **07.10.2026**
(21) Application number: 25460013.3
(22) Date of filing: 02.04.2025
(51) Int. Cl.: H02M 1/00, H02M 3/158, H02M 11/00, H05C 1/04, H01T 15/00

(54) **PLASMA PROCESS SYSTEM AND MULTILEVEL DC POWER SUPPLY AND METHOD**

(71) Applicant: TRUMPF Huettinger Sp. z o.o., 05-220 Zielonka (PL)
(72) Inventor: The designation of the inventor has not yet been filed
(74) Representative: Trumpf Patentabteilung

(57) **Abstract**

The plasma process system (120) which contains a HP-HV-pulsed power supply (10) and/or a multilevel DC power supply (2) is designed for reliable power supply, in particular to a plasma process, with quickly varying power pulses. For that, the multilevel DC power supply comprises:
• several low power generators (12);
• several switching units (13), and
• several converter modules (14), wherein

each switching unit is assigned to one of the low power generators, and comprises a first and a second switching element (15 - 20), connected in series between a positive input connection (39 -41) and a negative input connection (42 - 44), and building between each other a half bridge connection (45 - 47), respectively;
each converter module comprises a current change limiting inductance (27 - 29), and a voltage change limiting capacitor (33 - 35), connected between the first converter module output connection (51 - 53), and the second converter output connection (54 - 56), wherein each current change limiting inductance and each voltage change limiting capacitor is connected with its first end in a star point-connection (48 - 50), each current change limiting inductance is connected with its respective second end to the half bridge connection of its respective switching unit, and the converter modules are connected at their output connections in series, and this converter module series connection is connected to the DC power supply output connections (71, 72).

## Description

The invention relates to a multilevel DC power supply configured to deliver pulsed high power with a high value of voltage and/or high current to a capacitive load, in particular to a plasma process. The invention also relates to a HP-HV-pulsed power supply with such a multilevel DC power supply and a plasma process system with such a HP-HV-pulsed power supply. The invention relates further to a method for generating multilevel DC power with an aforementioned multilevel DC power supply, to generate HP-HV-pulsed power with an aforementioned HP-HV-pulsed power supply, or to run a plasma process with an aforementioned plasma process system.

"HP" shall be the abbreviation for "high power". With high power is meant an output power of at least 10 kW, preferred at least 30 kW, in particular with a maximum of 100 kW during a pulse-on time.

"HV" shall be the abbreviation for "high voltage". With high voltage is meant an output voltage of at least 8 kV, preferred at least 14 kV, in particular at least 20 kV during a pulse-on time.

By a capacitive load is meant a load with a capacitive part in particular plasma chamber, which means, that a voltage rise on this load implies a high current capability. The capacitive part may in these cases at least be 100 pF, preferred 200 pF or more, such as around 500 pF. This could be a load in a plasma process as, for example, a plasma treatment application.

Some plasma treatment applications, such as etching or layer deposition, demand a high voltage (HV), high frequency (HF), rectangular, asymmetrical, multilevel pulsed voltage supply. Often the voltage values significantly exceed the voltage handling possibilities of individual semiconductor switches, especially when high frequency operation is required. With high frequency is meant a frequency of at least 100 kHz, preferred at least 400 kHz.

In the patent application WO 2023/161510 A1, a HP-generator is described. With an HP-generator it is possible to generate high power pulses with different amplitudes directly, at the output of the HP-generator. Such a device separating the HV-generation from the pulse unit in order to gain flexibility and use for example an HV-power generator with different pulse units. Very often the HV power supplies just change their output voltage and/or current too slow, and the pulses are not precise enough.

In the patent application PCT/EP2024/074206, filed on the 29.08.2024, another HP-generator is described. High-power- (HP-) generator configured to deliver high power with a high value of voltage and/or high current value to a pulse unit, in particular to a plasma process. The HP-generator comprises a control input, configured to be connected to a control signal from an external pulsing control and a control unit configured to adjust the output of the HP-generator responsive to the signal at the control input. The inconvenience of the presented generator is the lack of voltage ripple control and the inability to quickly change the output voltage value.

It is an object of the present invention to present a multilevel DC power supply that allow reliable power supply, in particular to a plasma process, with quickly varying power pulses.

It is further an object to present a HP-HV-pulsed power supply with such a multilevel DC power supply that allow reliable power supply in particular to a plasma process, with quickly varying power pulses.

It is further an object of the present invention to present a plasma process system with such a HP-HV-pulsed power supply and/or with an aforementioned multilevel DC power supply that allow reliable power supply to a plasma process with quickly varying power pulses.

It is further an object of the present invention to present a method for generating multilevel DC power with an aforementioned multilevel DC power supply, to generate HP-HV-pulsed power with an aforementioned HP-HV-pulsed power supply, or to run a plasma process with an aforementioned plasma process system, all in a reliable way.

According to a first aspect, the multilevel DC power supply comprises a first DC power supply output connection, a second DC power supply output connection, several low power generators, several switching units, and several converter modules.

Each switching unit is assigned to one of the low power generators, and comprises:
- a positive input connection, connected to the assigned low power generator, respectively,
- a negative input connection, connected to the assigned low power generator, respectively,
- a first and a second switching element, connected in series between the positive and the negative input connection, and building between each other a half bridge connection, respectively.

Each converter module is assigned to a switching unit, and connected to the positive input connection, the negative input connection, and the half bridge connection of its assigned switching unit,

Every converter module comprises:
- a first and a second converter module output connection,
- a current change limiting inductance,
- a voltage change limiting capacitor, connected between the first converter and the second converter output connection, wherein
- each current change limiting inductance and each voltage change limiting capacitor is connected together with its first end in a star point-connection, respectively,
- each current change limiting inductance is connected with its respective second end to the half bridge connection of its respective switching unit, and
- the converter modules are connected at their output connections in series, and this converter module series connection is, at its first end, connected to the first DC power supply output connection, and, at its second end, connected to the second DC power supply output connection.

In ordinary developments, only one current-change-limiting-inductance was connected at the output of a multilevel DC power supply. In ordinary developments, only one voltage-change-limiting-capacitor was connected at the output of a multilevel DC power supply. With such a configuration, all switching units must work simultaneously.

In this development, every converter module has its own current change limiting inductance and own voltage change limiting capacitor. With that configuration, the switching units may be switched independently and may then be switched in an interleaving mode. This should mean, the switching units may be switched with a shift of 360/n degree, where n is the number of switching units. With that, it is possible to increase the frequency of the output voltage ripples by n and by this it is possible to reduce the level of this ripples. So, the possibility of working in interleaving mode for modules can significantly reduce the voltage ripples on the load.

With "voltage change limiting capacitor" is meant an electronic component that comprises two terminals. Preferably, this component is a passive component. It is configured to store electrical energy by accumulating electric charges. It is configured to change its voltage, if current flows in or out. So, if the stored charge is changed. In that way, it is configured to keep a voltage on a precharged level, depending to its actual charge and capacity. So, with such a component, voltage ripples or fast rises of voltage can be reduced. It is understood that the voltage ripple can only be suppressed to a certain degree. With a very high current into the capacitor, it is possible to change the voltage at its terminals fast. This is also dependent on the capacity of the capacitor. So, the capacity of the "voltage change limiting capacitor" is configured to keep the voltage change under a certain condition of expected current values.

The voltage change limiting capacitor may be a capacitor configured to keep the voltage in a predefined range within the range of frequency, voltage and current applied to it. The value may be in the range of 1 - 100 µF.

The voltage change limiting capacitor should be configured to withstand voltages of the output of the converter module to which it is connected. This may preferably be 1 kV or more.

With "current change limiting inductance" is meant an electronic component that comprises two terminals. Preferably, this component is a passive component. It should have the behavior to oppose a change in the current flowing through it. Typically, it such a component stores energy in a magnetic field when an electric current flows through it. For that, it is often realised with an insulated wire wound into a coil. The magnetic field may be enhanced with a ferromagnetic core. The term "inductance" is also used for the value of this component. This value is defined by the ratio of the voltage to the rate of change of current. So, the higher the value of the inductance is, the better can the current change be limited, when a certain voltage is applied to the two terminals of the component.

The current change limiting inductance in this disclosure should withstand voltages of the output of the converter module to which it is connected. This may preferably be 1 kV or more.

The nominal current for the current change limiting inductance depends to load power and the working frequency of the assigned pulse unit. This may preferably be 50A or more.

The current change limiting inductance may be an inductance of different designs, configured to work in the range of frequency, voltage and current applied to it, such as a planar inductance on a PCB, an air inductance, or an inductance with a ferrite core. The value may be in the range of 10 - 500 µH.

Each "Low power generator" may be configured as a voltage source.

Each "Low power generator" may have an LP-generator-capacitor connected at its output.

"Low power generator" may have the meaning of the "LP-generator" described in WO 2023/161510 A1 or PCT/EP2024/074206 which are both incorporated into this application by reference in their entirety.

The switching elements may be transistors, in particular MOSFETS. MOSFETS provide high switching capability, can be used with currents of 50 A or more, and allow voltages of 500 V or more to be switched. If MOSFETS are being used, an antiparallel diode may be provided for each MOSFET, in particular in parallel to each MOSFET. The MOSFETs may be silicon-carbide- (SiC-) based or gallium-nitride- (GaN-) based MOSFETs which are suitable for fast switching voltages of 500 V or more with high rise and fall times of voltage (15 kV/µs or more) as well as high currents (50 A or more) with high rise and fall times of current (10 A/µs or more).

With such a configuration the above-mentioned object can be accomplished in a reliable way.

In an aspect, every converter module comprises further an energy transfer diode.

With "diode" is meant an electronic component comprising two terminals with an asymmetric conductance. One terminal is named "cathode", the other "anode". It preferably conducts current primarily in one direction from anode to cathode. For that, it has low resistance in this direction and high resistance in the other. In the case, another component or circuit, such as a tube or transistor, e.g., with special peripheral circuits or with parasitic features, behave in the same way, such a component or circuit should be - for this disclosure - per definition also a 'diode'.

In an aspect, each energy transfer diode is connected with its first end to the star point-connection.

In an aspect, each energy transfer diode is connected with its second end to one of the positive input connection or the negative input connection of its respective switching unit.

This should mean, e.g., the energy transfer diode may be connected to the positive input connection of its respective switching unit, in particular with its cathode, respectively.

In this example, the star point-connection may be connected to the first converter module output connection which may be the positive converter module output connection, respectively.

In another example the energy transfer diode may be connected to the negative input connection of its respective switching unit, in particular with its anode, respectively.

In this "another" example, the star point-connection may be connected to the second converter module output connection which may be the negative converter module output connection, respectively.

With such energy transfer diodes, it is possible to lead energy, stored in the change limiting inductances, into uncritical parts of the multilevel DC power supply, such as e.g., the LP-generators.

With such a configuration the above-mentioned object can be accomplished in a reliable way.

In one aspect, each star point-connection is connected to one of the first or the second converter module output connection of its respective converter module.

With such a configuration the above-mentioned object can be accomplished in a very reliable way.

In one aspect, the multilevel DC power supply comprises several energy absorbing components, preferably at least one in each switching unit and/or in each converter module.

With such a configuration the above-mentioned object can be accomplished in a very reliable way.

Such energy absorbing components may be realised in a big variety. Such a component may be a resistor, combination of a resistor with an inductance and/or capacitor, or a combination of a resistor with a semiconductor-based component such as a diode or a transistor. Such a component may also be realised by giving the above or blow mentioned diodes, switching elements, capacitors or inductances internal resistive part or behavior.

In one aspect, each switching unit comprises a first diode and a second diode connected in series, wherein the connection point of the first diode and second diode is connected to the half bridge connection in the respective switching unit.

These diodes may have the effect of limiting voltage and give current a way to flow, if one switching element is switched off during current flow. With such a configuration the above-mentioned object can be accomplished in a very reliable way.

In one aspect, each converter module contains an additional freewheeling diode.

Such freewheeling diodes may have the effect of limiting voltage and give current a way to flow, if one switching element is switched off during current flow. With such a configuration the above-mentioned object can be accomplished in a very reliable way.

In one aspect, each freewheeling diode is connected with their respective first end to the star point-connection and, with their respective second end to one of the first converter module output connection or the second converter module output connection of its respective converter module.

With such a configuration the above-mentioned object can be accomplished in a very reliable way.

In one aspect, each freewheeling diode is connected in parallel to the voltage change limiting capacitor of its respective converter module.

With such a configuration the above-mentioned object can be accomplished in a very reliable way.

In one aspect, all freewheeling diodes are connected in series.

With such a configuration the above-mentioned object can be accomplished in a very reliable way.

In one aspect, the multilevel DC power supply comprises a heat dissipating component.

Such a heat dissipating component may be a cooling body, forced air-cooling, fluid cooling, etc. The power level of the multilevel DC power supply is very often very high. So, even when efficiency is very good, there is still more heat generated as the parts may dissipate into the environment without such a heat dissipating component. In particular the switching elements must often be configured to switch on, when there is still voltage across their outputs or switch off, when there is still current flowing though them. This generates usually always heat, as the switching speed is never infinite.

With such a configuration the above-mentioned object can be accomplished in a very reliable way.

In one aspect, all freewheeling diodes are connected in series.

With such a configuration the above-mentioned object can be accomplished in a very reliable way.

In an aspect, each LP-generator has at its output a behavior of an output capacitor with a capacity level which is higher than the capacity of the voltage change limiting capacitor of its respective converter module.

With such a configuration the above-mentioned object can be accomplished in a very reliable way.

In an aspect, the combination of one or each switching unit with its assigned converter module is configured to work as a boost-converter, in order to transfer energy from its voltage change limiting capacitor to the assigned LP-generator.

In an aspect, the combination of one or each switching unit with its assigned converter module is configured to work as a buck-converter, in order to transfer energy from its voltage change limiting capacitor to the assigned LP-generator.

In that way the risk of an overcharging of the voltage change limiting capacitor may be reduced.

In an aspect, the combination of one or each switching unit with its assigned converter module is configured to work as a boost-converter, in order to transfer energy from the assigned LP-generator to its voltage change limiting capacitor. In an aspect, the combination of one or each switching unit with its assigned converter module is configured to work as a buck-converter, in order to transfer energy from the assigned LP-generator to its voltage change limiting capacitor.

In that way the voltage change limiting capacitor may be precharged to a predetermined level.

Boost-converter shall by a synonym for step-up-converter.

Buck-converter shall be a synonym for step-down-converter.

The object is also solved by a HP-HV-pulsed power supply comprising a multilevel DC power supply, as described in this document, and a pulse unit connected to the outputs of the multilevel DC power supply.

With such a configuration the above-mentioned object can be accomplished in a very reliable way.

The pulse unit may comprise a capacitor connected at its input connections. The pulse unit may comprise a capacitive behavior.

In a development, the pulse unit comprises a first pulse unit switching element.

With such a configuration the above-mentioned object can be accomplished in a very reliable way.

In a development, the pulse unit comprises a second pulse unit switching element.

With such a configuration the above-mentioned object can be accomplished in a very reliable way.

In a development, the first pulse unit switching element is connected in series between multilevel DC power supply and an output of the HP-HV-pulsed power supply which is configured to be connected to the load. The first pulse unit switching element may be configured to connect and disconnect the multilevel DC power supply to the output of the pulse unit.

With such a configuration the above-mentioned object can be accomplished in a very reliable way.

In a development, the second pulse unit switching element is connected in parallel to the output of the pulse unit. The second pulse unit switching element may be configured to connect and disconnect the output of the pulse unit to a different potential, in particular to short-circuit the output of the pulse unit.

With such a configuration the above-mentioned object can be accomplished in a very reliable way.

The HP-HV-pulsed power supply may comprise a matchbox connected at its output and to be arranged before the load, in particular before the plasma chamber. The matchbox may be configured for impedance matching the output impedance of the HP-HV-pulsed power supply to the load. The The matchbox may comprise one or several reactive components such as capacitor(s) and inductance(s).

The object is also solved by a plasma process system comprising a HP-HV-pulsed power supply, as described in this document, and a plasma chamber, as described in this document. The plasma chamber is configured for plasma processing of a substrate. The substrate may be a semiconductor device to be fabricated with plasma process. The HP-HV-pulsed power supply is connected to the plasma chamber. The HP-HV-pulsed power supply is configured to deliver pulsed multilevel power to the plasma process.

The object is also solved by a plasma process system comprising a multilevel DC power supply, as described in this document, and a plasma chamber, as described in this document.

The object is also solved by a method for generating multilevel DC power with an aforementioned multilevel DC power supply, wherein a first switching unit is controlled independently of a first switching unit.

The object is also solved by a method for generating multilevel DC power with an aforementioned multilevel DC power supply, wherein a first switching unit is controlled with a phase delay compared to a second switching unit.

In an aspect, the phase delay is chosen related to the number n of switching units, in particular chosen to 360/n degree.

With that, it is possible to increase the frequency of the output voltage ripples by n and by this it is possible to reduce the level of this ripples. So, the possibility of working in interleaving mode for modules can significantly reduce the voltage ripples on the load.

The object is also solved by for generating HP-HV-pulsed power with an aforementioned HP-HV-pulsed power supply with an aforementioned multilevel DC power supply, and with its method to generate multilevel DC power.

The object is also solved by method to run a plasma process with an aforementioned plasma process system with an aforementioned HP-HV-pulsed power supply and/or an aforementioned multilevel DC power supply, and with its method to generate multilevel DC power. The present disclosure is illustrated by way of example and not limited in the accompanying figures in which like reference numerals indicate similar elements. Embodiments of the application will now be described with reference to the attached drawings:
Fig. 1a - 1d each show a plasma process system with a HP-HV-pulsed power supply connected to a plasma process with respective signal diagrams.
Fig. 1e shows a sequence of pulses with varying amplitude.
Fig. 2a - 2d, Fig. 3a - 3d, and Fig 4 a - 4b each show a plasma process system with a HP-HV-pulse power supply with a more detailed schematic of a multilevel DC power supply.
Fig. 5a - 5b each show a waveform of output voltage during and after short circuit on output.
Fig. 6 shows a plasma processing system with a plasma chamber.

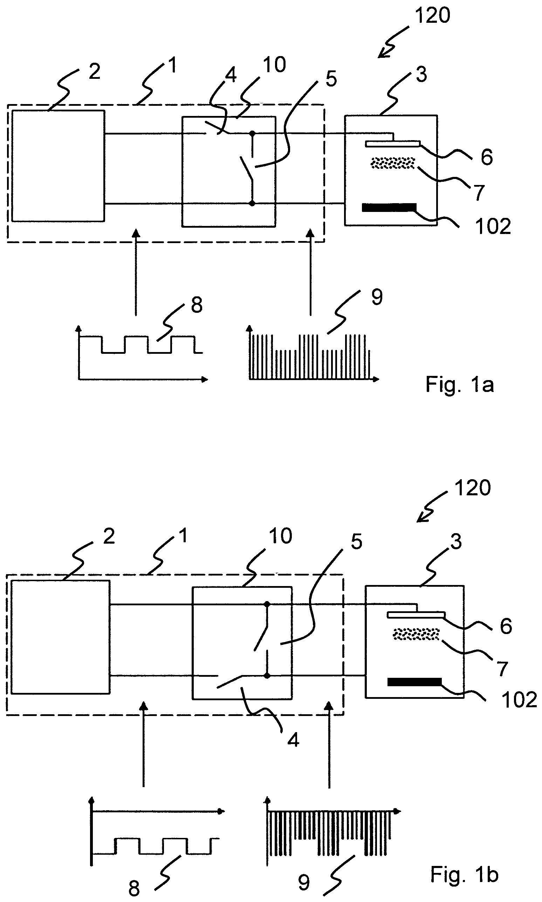

In Fig. 1a to Fig 1d is shown a plasma process system 120 with a HP-HV-pulsed power supply 1 connected to a plasma process with a plasma chamber 3, respectively. In the plasma chamber 3 are shown an electrode 6 and the plasma 7 and a substrate 102. The substrate 102 may be a workpiece to be processed by the plasma 7. The plasma process system 120 may be a semiconductor device fabrication process chamber. The substrate is then the semiconductor device to be processed. Processing step may be etching, sputtering, Plasma-enhanced chemical vapor deposition (PECVD), physical vapor deposition (PVD), ashing, cleaning, activating, or similar process steps. Since the dimensions of the structures of semiconductor devices are continuously shrinking, and the number of process steps rises at the same time, reliability, accuracy and stability of the power delivered to the plasma process becomes more and more important. It is therefor, in particular for such processes extremely important to reach the aforementioned objective.

This disclosure addresses the following problems occurring in a high-power high-voltage (HP-HV-) pulsed power supply 1, in particular in a plasma process system 120 with such a HP-HV-pulsed power supply 1: high voltage ripples, time of changing the value of output voltage and level of output voltage, high capacitive load and short-circuit on the load.

The HP-HV-pulsed power supply 1 comprises a multilevel DC power supply 2 and a pulse unit 10 connected to the outputs of the multilevel DC power supply 2. The pulse unit 10 comprises two pulse unit switching elements 4 and 5.

The first pulse unit switching element 4 is connected in series between multilevel DC power supply 2 and a load, here a capacitive load, in particular a plasma load, which is symbolized by the plasma chamber 3. The first pulse unit switching element 4 is configured to connect and disconnect the multilevel DC power supply 2 to the output of the pulse unit 10.

The second pulse unit switching element 5 is connected in parallel to the output of the pulse unit 10 and configured to connect and disconnect the output of the pulse unit 10 to a different potential, here to short-circuit the output. This means to connect one output connection of the pulse unit 10 to ground as the other output connection is grounded at the plasma chamber 3.

In Fig 1a to Fig 1d are shown additionally two signal diagrams, respectively.

In the respective left diagram is shown a multilevel DC voltage 8 which should show a typical voltage at the output of the multilevel DC power supply 2.

In the respective right diagram is shown a chopped multilevel DC voltage 9 which should show a typical voltage at the output of pulse unit 10 and or the HP-HV-pulsed power supply 1.

So, the pulse unit 10 is configured to chop the signal, what was outputted from the multilevel DC power supply 2. Such a chopped multilevel DC power has big advantages in the field of plasma process, in particular in the field of semiconductor device fabrication with a plasma process, especially in the field of etching and/or PECVD.

Fig. 1b shows a HP-HV- pulsed power supply 1 connected to a plasma process similar to that in Fig. 1a. The only difference is that the high-power high-voltage (HP-HV-) pulsed power supply 1 is here configured to build negative pulses to the electrode 6 in the plasma chamber 3.

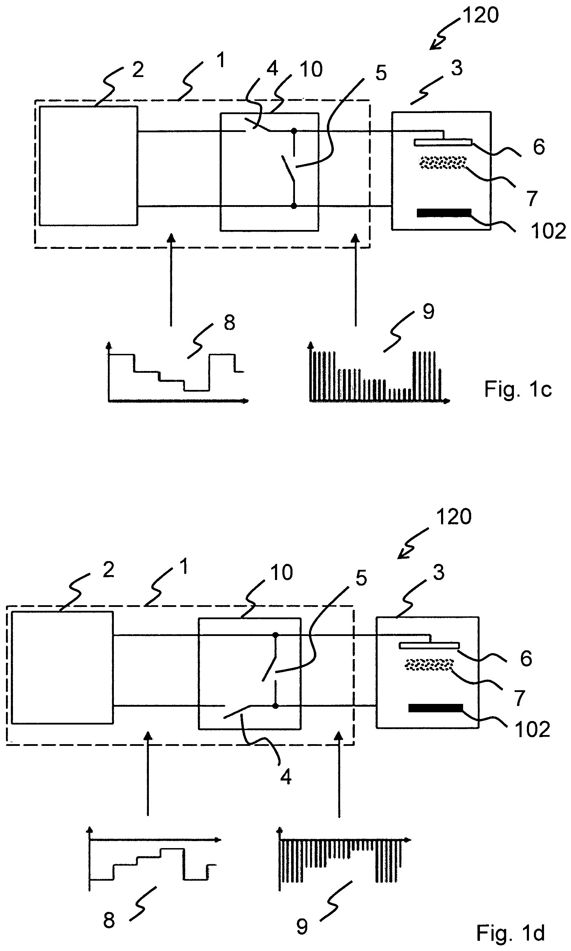

Fig. 1c shows a HP-HV- pulsed power supply 1 connected to a plasma process similar to that in Fig. 1a. The only difference is that the high-power high-voltage (HP-HV-) pulsed power supply 1 is here configured to build pulses with more than two levels to the electrode 6 in the plasma chamber 3.

Fig. 1d shows a HP-HV- pulsed power supply 1 connected to a plasma process similar to that in Fig. 1c. The only difference is that the high-power high-voltage (HP-HV-) pulsed power supply 1 is here configured to build negative pulses to the electrode 6 in the plasma chamber 3.

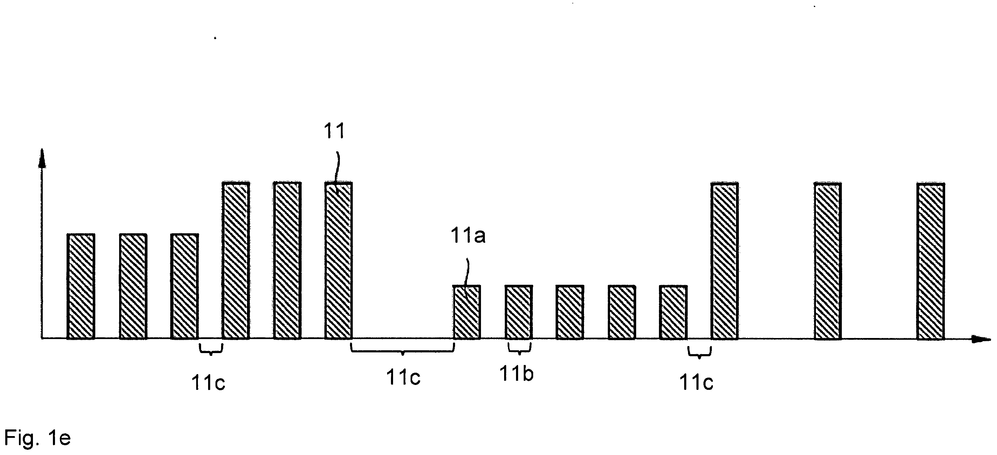

Fig. 1e shows a sequence of pulses 11 that is required by a plasma application. It can be seen that the amplitude of the pulses 11 may have to be constant for some pulses, but also may have to amplitude change from pulse 11 to pulse 11a.

It can also be seen that the pulse-low-durations 11c may have different lengths.

The pulse-high-durations 11b may also have different lengths, also in this graph only pulse-high-durations 11b with similar lengths are shown.

In such a way the aforementioned object of the invention may be accomplished. The independent pulse unit 10 opens a high flexibility, and the pulses are precise constant in value which is extremely important for some special plasma processes such as etching in semiconductor fabrication, e.g..

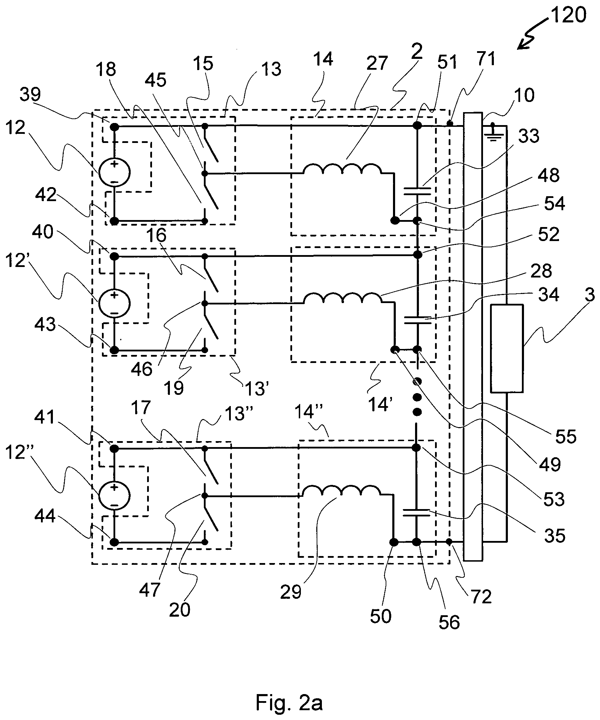

In Fig. 2a to Fig 2d and Fig 3a to 3d and Fig 4a, 4b is shown a plasma process system 120 with a HP-HV-pulsed power supply 1 connected to a plasma process with a plasma chamber 3, respectively. The pulse unit 10 and the plasma chamber 3 are shown in those figures only very schematically, but the multilevel DC power supply 2 in much more detail and some variations.

Fig. 2a shows the multilevel DC power supply 2 with several low power generators 12, 12', 12", several switching units 13, 13', 13" and several converter modules 14, 14', 14". The configuration with the low power generators 12, 12', 12", and the assigned switching units 13, 13', 13" is known from WO 2023/161510 A1, e.g.. The converter modules 14, 14', 14", each assigned and connected to a switching unit 13, 13', 13" is, compared to the disclosure of WO 2023/161510 A1 in this disclosure new.

A first switching unit 13 comprises a positive input connection 39, connected to a low power generator 12, a negative input connection 42, connected to the low power generator 12.

A second switching unit 13' comprises a positive input connection 40, connected to a low power generator 12', a negative input connection 43, connected to the low power generator 12'.

A third switching unit 13" comprises a positive input connection 41, connected to a low power generator 12", a negative input connection 44, connected to the low power generator 12".

The first switching unit 13 comprises a first switching element 15 and a second switching element 18, connected in series between the positive input connection 39 and the negative input connection 42 of the first switching unit 13. The connection point of those both switching elements 15, 18 builds the half bridge connection 45.

The second switching unit 13' comprises a first switching element 16 and a second switching element 19, connected in series between the positive input connection 40 and the negative input connection 43 of the second switching unit 13'. The connection point of those both switching elements 16, 19 builds the first half bridge connection 46.

The third switching unit 13" comprises a first switching element 17 and a second switching element 20, connected in series between the positive input connection 41 and the negative input connection 44 of the second switching unit 13". The connection point of those both switching elements 17, 20 builds the third half bridge connection 47.

Fig. 2a shows further three converter modules 14, 14', 14", each connected to a assigned switching unit 13, 13', 13".

Each converter module 14, 14', 14" is assigned to a switching unit 13, 13', 13', and connected to the positive input connection 39, 40, 41, the negative input connection 42, 43, 44, and the half bridge connection 45, 46, 47 of its assigned switching unit 13, 13', 13".

A first converter module 14 is connected to the positive input connection 39, the negative input connection 42, and the half bridge connection 45 of its assigned first switching unit 13.

A second converter module 14' is connected to the positive input connection 40, the negative input connection 43, and the half bridge connection 46 of its assigned second switching unit 13'.

A third converter module 14" is connected to the positive input connection 41, the negative input connection 44, and the half bridge connection 47 of its assigned third switching unit 13".

The first converter module 14 comprises a first converter module output connection 51, a second converter module output connection 54, a current change limiting inductance 27, and a voltage change limiting capacitor 33.

The second converter module 14' comprises a first converter module output connection 52, a second converter module output connection 55, a current change limiting inductance 28, and a voltage change limiting capacitor 34.

The third converter module 14" comprises a first converter module output connection 53, a second converter module output connection 56, a current change limiting inductance 29, and a voltage change limiting capacitor 35.

Each voltage change limiting capacitor 33, 34, 35 is connected between the first converter module output connection 51, 52, 53 and the second converter output connection 54, 55, 56 of its respective converter module 14, 14', 14".

Each current change limiting inductance 27, 28, 29 and each voltage change limiting capacitor 33, 34, 35 is connected together with its respective first end in a star point-connection 48, 49, 50 in its respective converter module 14, 14', 14".

Each current change limiting inductance 27, 28, 29 is connected with its respective second end to the half bridge connection 45, 46, 47 of its respective assigned switching unit 13, 13', 13".

The multilevel DC power supply 2 comprises a first DC power supply output connection 71 and the second DC power supply output connection 72 at the output of the multilevel DC power supply 2.

More than those three shown combinations of LP-generators 12, 12', 12", switching units 13, 13', 13", and converter module 14, 14', 14" are possible, which is symbolized by the three points between the output connections 55, 53.

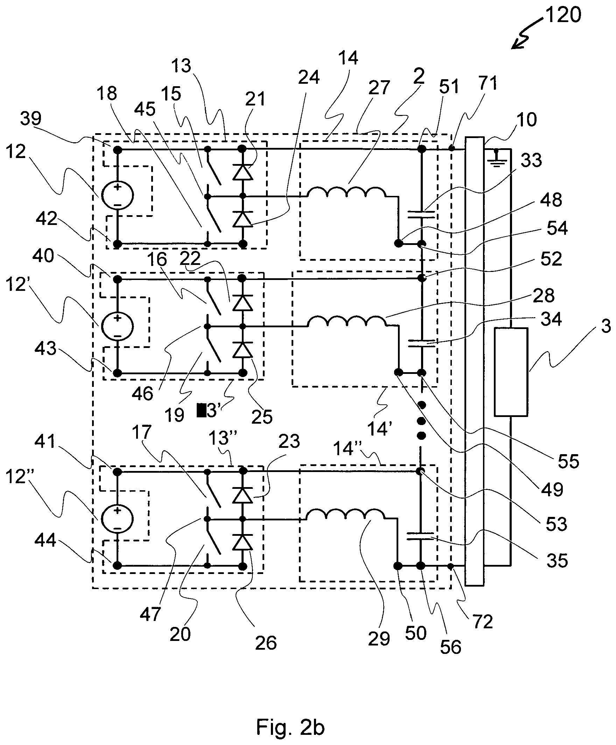

Fig 2a and 2b only differ by the additional first and second diodes 21, 22, 23, 24, 25, 26 in each switching unit 13, 13', 13", shown in Fig. 2b.

The first switching unit 13 comprises a first diode 21 and a second diode 24, connected in series between the positive input connection 39 and the negative input connection 42 of the first switching unit 13. The connection point of those both diodes 21, 24 is connected to the half bridge connection 45. So, both diodes 21, 24 are connected parallel to the switching elements 15, 18 of the first switching unit 13, respectively.

The second switching unit 13' comprises a first diode 22 and a second diode 25, connected in series between the positive input connection 40 and the negative input connection 43 of the second switching unit 13'. The connection point of those both diodes 22, 25 is connected to the half bridge connection 46 of the second switching unit 13'. So, both diodes 22, 25 are connected parallel to the switching elements 16, 19 of the second switching unit 13', respectively.

The third switching unit 13" comprises a first diode 23 and a second diode 26, connected in series between the positive input connection 41 and the negative input connection 44 of the third switching unit 13". The connection point of those both diodes 23, 26 is connected to the half bridge connection 47 of the third switching unit 13". So, both diodes 23, 26 are connected parallel to the switching elements 17, 20 of the second switching unit 13', respectively.

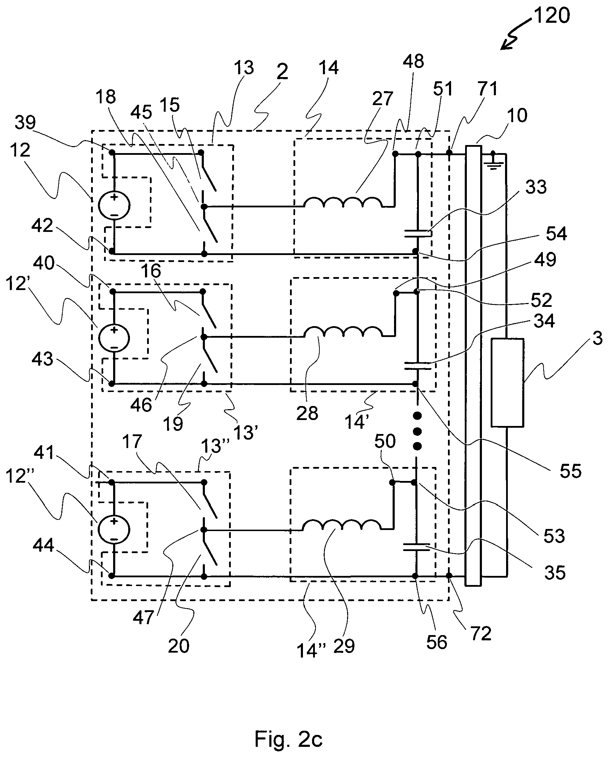

Fig. 2a and Fig. 2c only differ by the connection of the star point connections 48, 49, 50.

In Fig. 2a, the first star point connection 48 of the first converter module 14 is connected to the second converter module output connection 54 of the first converter module 14.

In Fig. 2c, the first star point connection 48 of the first converter module 14 is connected to the first converter module output connection 51 of the first converter module 14.

In Fig. 2a, the second star point connection 49 of the second converter module 14' is connected to the second converter module output connection 55 of the second converter module 14'.

In Fig. 2c, the second star point connection 49 of the second converter module 14' is connected to the first converter module output connection 52 of the second converter module 14'.

In Fig. 2a, the third star point connection 50 of the third converter module 14" is connected to the second converter module output connection 56 of the third converter module 14".

In Fig. 2c, the third star point connection 50 of the third converter module 14" is connected to the first converter module output connection 53 of the third converter module 14".

So, the configuration of Fig. 2c is merely an alternative to the configuration of Fig. 2a.

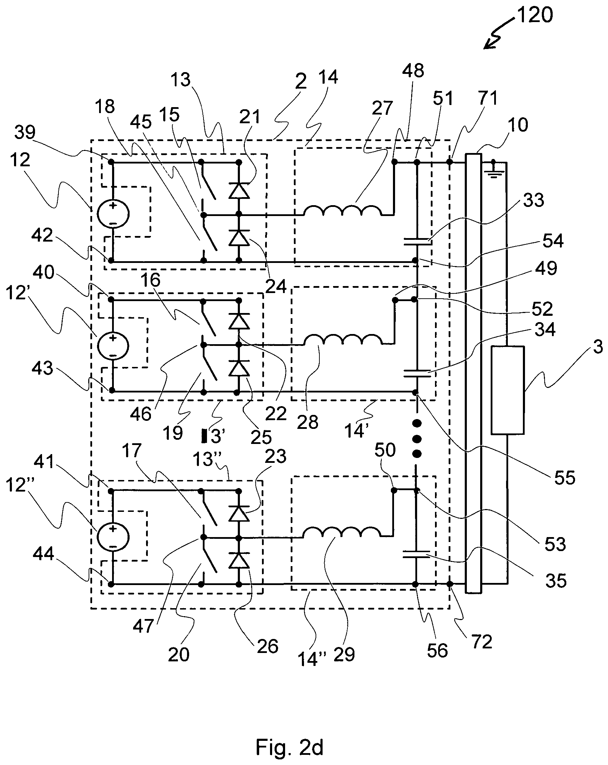

Fig. 2b and Fig. 2d only differ by the connection of the star point connections 48, 49, 50 in the same way as they differ between the Fig. 2a and 2c. But Fig. 2d shows also the first and second diodes 21, 22, 23, 24, 25, 26 in each switching unit 13, 13', 13", as shown in Fig. 2b.

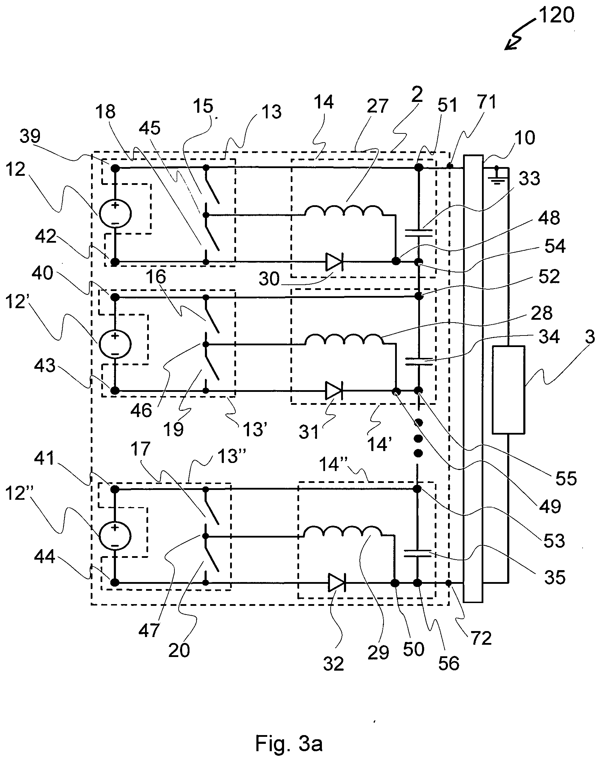

In Fig 3a to Fig. 3d is shown a plasma process system 120 with a HP-HV-pulsed power supply 1 connected to a plasma process with a plasma chamber 3, respectively in a very similar way as in Fig. 2a to Fig. 2d.

The difference between the Fig. 2a and the Fig. 3a is the additional energy transfer diode 30,31,32 in each converter module 14, 14', 14", connected between the negative input connection 42, 43, 44 of the switching unit 13, 13', 13" and the star point connection 48, 49, 50 of each converter module 14, 14', 14".

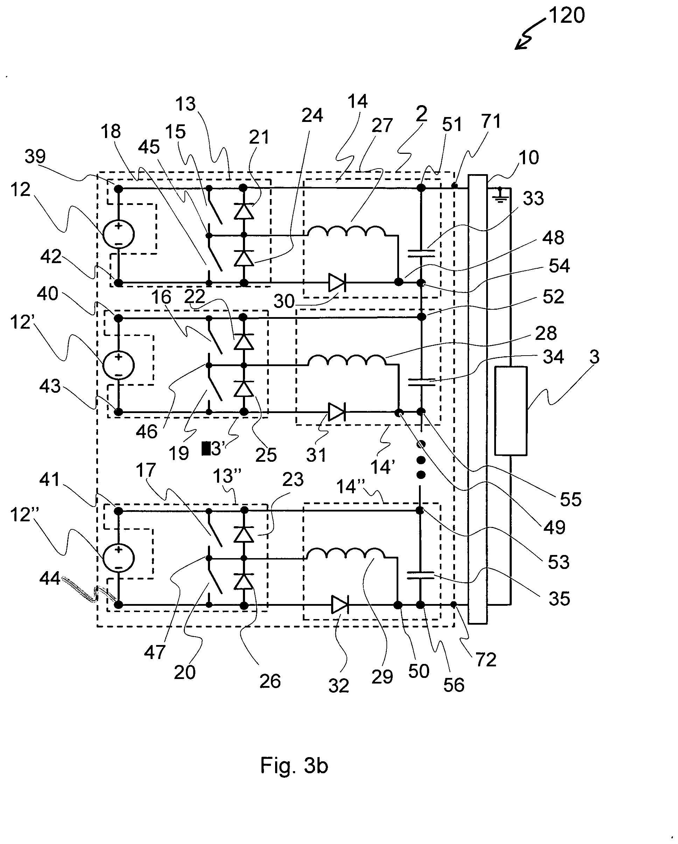

The difference between the Fig 2b and the Fig. 3b is the additional energy transfer diode 30, 31, 32 in each converter module 14, 14', 14", connected between the negative input connection 42, 43, 44 of the switching unit 13, 13', 13" and the star point connection 48, 49, 50 of each converter module 14, 14', 14".

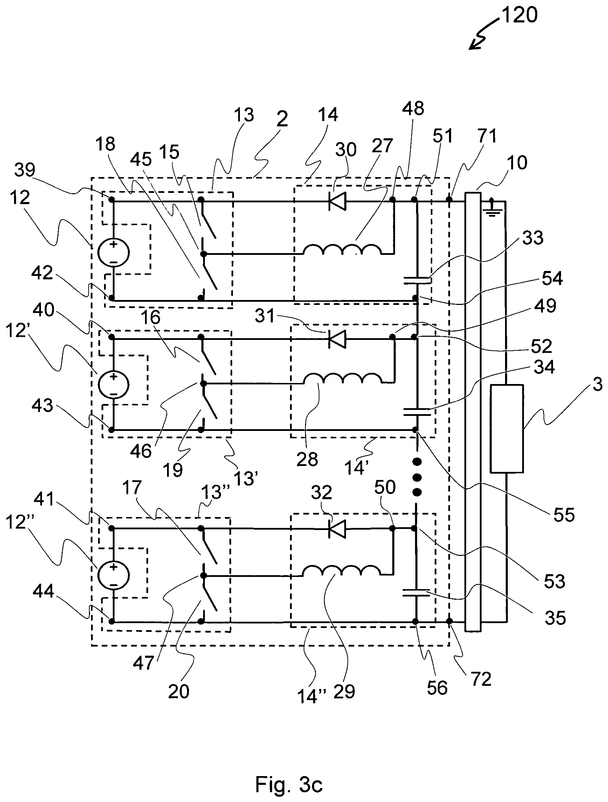

The difference between the Fig. 2c and the Fig. 3c is the additional energy transfer diode 30, 31, 32 in each converter module 14, 14', 14", connected between the positive input connection 42, 43, 44 of the first switching unit 13, 13', 13" and the star point connection 48, 49, 50 of each converter module 14, 14', 14".

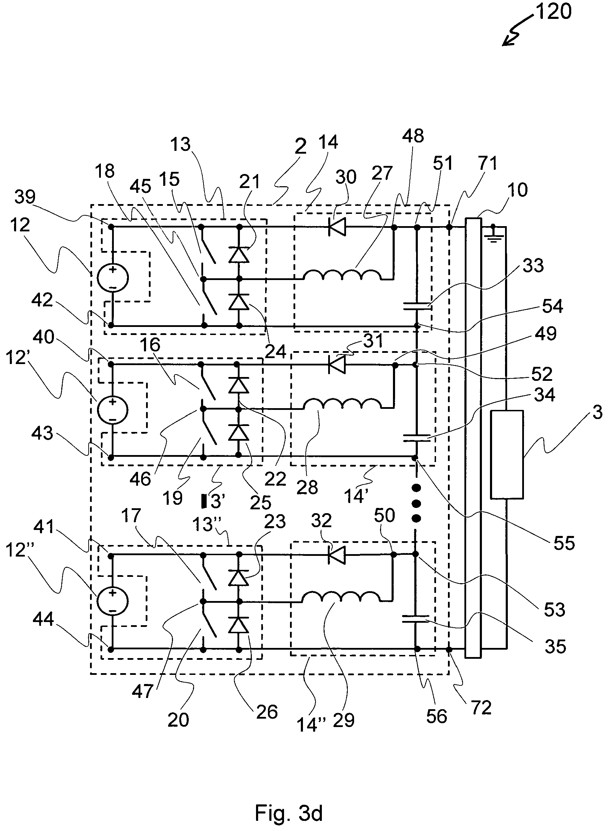

The difference between the Fig. 2d and the Fig. 3d is the additional energy transfer diode 30, 31, 32 in each converter module 14, 14', 14", connected between the positive input connection 42, 43, 44 of the first switching unit 13, 13', 13" and the star point connection 48, 49, 50 of each converter module 14, 14', 14".

The aforementioned current change limiting inductances 27, 28, 29 may have the drawback that in case of low resistance at the output of the multilevel power supply 2 which may come from a short circuit in the load, e.g. plasma process, e.g., caused by an arc, or by switching on a switching element 5 in a pulse unit 10 at the output of the multilevel power supply 2, fast rising of currents may be limited but, at the end, too strong currents still may occur. This could be countered by choosing a current change limiting inductance 27, 28, 29 with a higher value of inductance. But this would mean also to slow down the slope of the pulses of the multilevel power supply 2, what is not possible to all degrees, as the slope at its output is a requirement of the process, and this process is a load which may have a significantly capacitive part. So, a minimum of output current rise is needed. So, the value of inductance has a maximum value related to the requirements of the process of the load. Another countermeasure may be to detect such a current rise and disconnected by switching off switching elements in the corresponding switching unit 13, 13', 13". As the currents in the change limiting inductances 27, 28, 29 are then already quite high, this will cause to a very fast voltage rise at the terminals of those change limiting inductances 27, 28, 29.

This fast voltage rise cannot be fully compensated by the voltage change limiting capacitors 33, 34, 35. This is so, because also the capacitance values of the voltage change limiting capacitors 33, 34, 35 must be limited, because also those components will otherwise slow down the slope of voltage and/or current at the output of the multilevel DC power supply 2, when dimensioned with too high values.

All those negative effects may be reduced by the energy transfer diodes 30, 31, 32, as they may lead the energy from the current change limiting inductances 27, 28, 29 back to the LP-generators 12, 12', 12".

So, the energy transfer diodes 30, 31, 32 and the current change limiting inductances 27, 28, 29 can work together in a synergistical way.

The series connection of several low converter modules 14, 14', 14" may allow for scalability of the HP-HV-pulsed power supply 1, enabling the system to meet varying power requirements by adding or removing generators as needed.

The inclusion of half bridge connections 45, 46, 47 with switching units 13, 13', 13" comprising first and second switching elements 18, 19, 20, as well as first and second diodes 24, 25, 26, may provide flexibility in controlling the power flow, which can improve the efficiency of the power conversion process.

The star point-connection 48, 49, 50 of the current change limiting inductance 27, 28, 29, the energy transfer diode 30, 31, 32, and the voltage change limiting capacitor 33, 34, 35 within each converter module 14, 14', 14" may facilitate the distribution of energy and may help to stabilize the output voltage, thereby enhancing the reliability of the multilevel DC power supply 2 and, especially the HP-HV-pulsed power supply 1 and, in particular the plasma process system 120.

The multilevel DC power supply 2 may provide the advantage of enhanced connectivity between low power generators 12, 12', 12", ensuring efficient power distribution and improved performance.

The design of the HP-HV-pulsed power supply 1 may offer the advantage of synergical operation among the various components, leading to enhanced energy utilization and reduced losses.

The configuration of converter modules 14, 14', 14" may provide the advantage of improved conductive pathways, facilitating better current flow and minimizing resistance, may drain out energy and may protect voltage change limiting capacitors 33, 34, 35 from charging to a voltage greater than low power generators 12, 12', 12".

The arrangement of the components within the HP-HV-pulsed power supply 1 may provide the advantage of correlated functionality, allowing for seamless integration and operation of the system.

The modular design of the HP-HV-pulsed power supply 1 may provide the advantage of attachable components, enabling easy upgrades and maintenance without significant system disruption.

The star point-connection 48, 49, 50 of current change limiting inductances 27, 28, 29, voltage change limiting capacitors 33, 34, 35, and energy transfer diodes 30, 31, 32 simplifies the circuit design of the multilevel DC power supply 2, which can reduce manufacturing complexity and costs.

This configuration can improve the transient response of the HP-HV-pulsed power supply 1, allowing it to better handle sudden changes in plasma load or input voltage, which contributes to the stability of the plasma system under varying operating conditions.

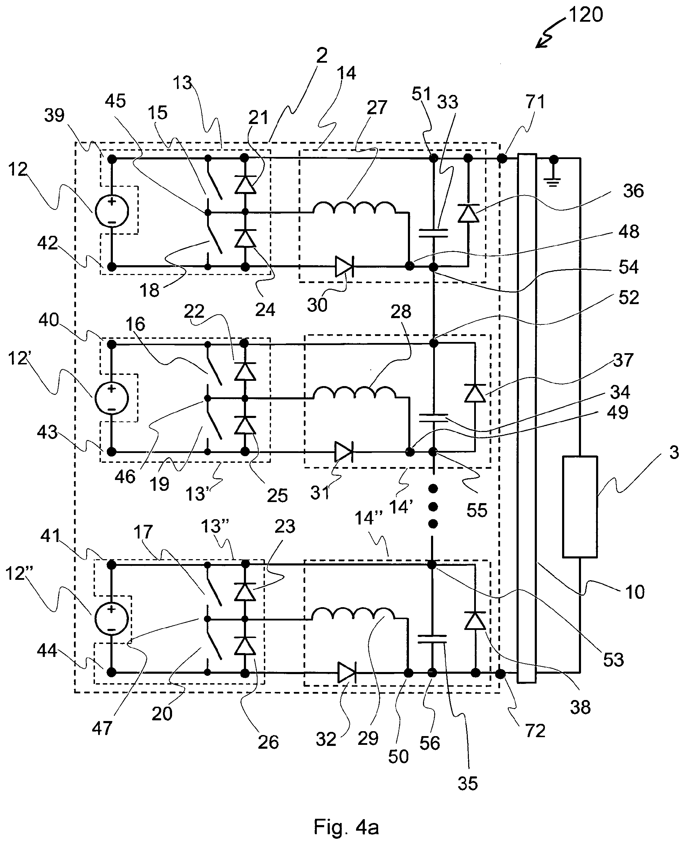

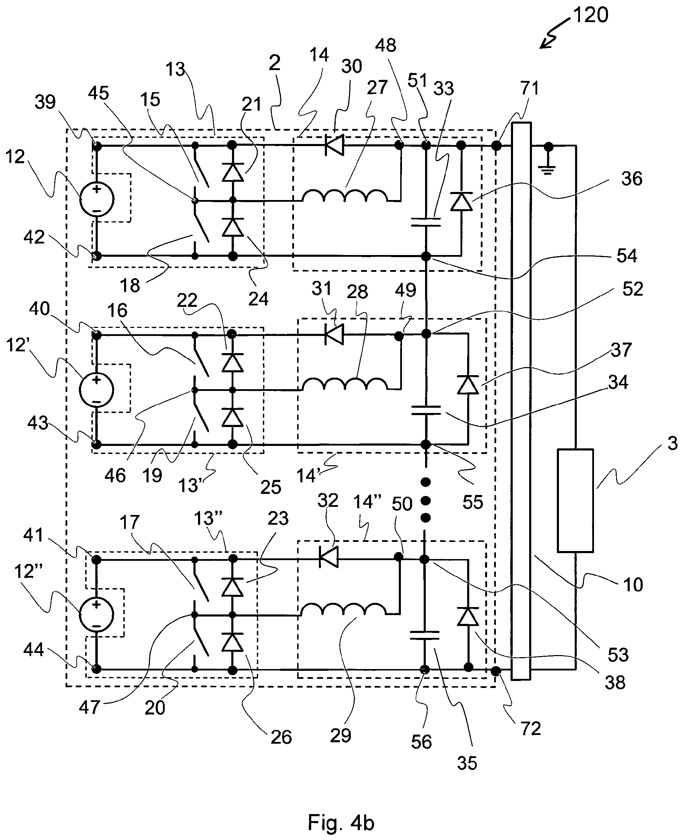

In Fig 4a and Fig. 4b is shown a plasma process system 120 with a HP-HV-pulsed power supply 1 connected to a plasma process with a plasma chamber 3, respectively in a very similar way as in Fig. 2a to Fig. 2d and Fig. 3a to 3d.

The difference between the Fig 3b and the Fig 4a is the additional freewheeling diode 36, 37, 38 in each converter module 14, 14', 14".

The freewheeling diode 36, 37, 38 is connected with its respective first end to the star point-connection 48, 49, 50 and, with its respective second end to one of the first output connection 51, 52, 53 of its respective converter module 14, 14', 14".

The difference between the Fig 3d and the Fig 4d is the additional freewheeling diode 36, 37, 38 in each converter module 14, 14', 14".

The freewheeling diode 36, 37, 38 is connected with its respective first end to the star point-connection 48, 49, 50 and, with its respective second end to one of the second output connection 54, 55, 56 of its respective converter module 14, 14', 14".

It is clear that also the Figures 2a, 2b, 2c, 2d, 3a, 3c may be modified by such an additional freewheeling diode 36, 37, 38 in an analog way as it is shown in Fig. 4a and Fig 4b.

In both figures, Fig 4a, and Fig 4b, the freewheeling diode 36, 37, 38 is connected in parallel to the voltage change limiting capacitor 33, 34, 35 of its respective converter module 14, 14', 14".

In both figures, Fig 4a, and Fig 4b, all freewheeling diodes 36, 37, 38 are connected in series.

It is clear and unambiguously reproduceable that also the Figures 2a, 2b, 2c, 2d, 3a, 3c and circuits with the same behavior may be modified by such an additional freewheeling diode 36, 37, 38 in an analogue way as it is shown and described with the transition from Fig. 3b to Fig. 4a and Fig. 3d to Fig 4b.

The freewheeling diode 36, 37, 38 in each converter module 14, 14', 14" can provide better protection against reverse voltage, which can prevent damage to the HP-HV-pulsed power supply 1 and enhance its longevity.

By providing multiple connection options for the converter module 14, 14', 14", the HP-HV-pulsed power supply 1 can be tailored to enhance power conversion efficiency for specific load requirements, which can result in energy savings and reduced operational costs.

Connecting the second end of the voltage change limiting capacitor 33, 34, 35 to either the first converter module output connection 51, 52, 53 or second converter module output connection 54, 55, 56, but not to the same one to the star point-connection 48, 49, 50, ensures that the capacitor can effectively limit voltage spikes or surges, thereby protecting the connected electrical components from potential damage.

This configuration can provide a more balanced distribution of reactive power within the system, which can lead to improved power factor correction and reduced energy losses in the power supply.

The strategic connection of the voltage change limiting capacitor 33, 34, 35 can also help in filtering out high-frequency noise from the HP-HV-pulsed power supply 1 output, resulting in a cleaner and more stable voltage supply to the load, which is particularly beneficial for sensitive electronic equipment.

The flexibility in connecting the converter module 14, 14', 14" between various input and output connections allows for easy adaptation to different circuit topologies, making the power supply versatile for use in a wide range of applications.

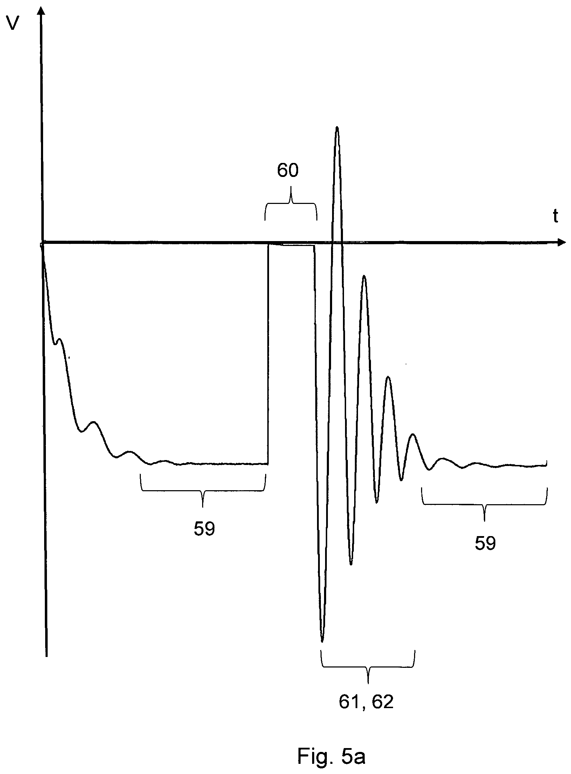

Fig. 5a shows a waveform of output voltage in a time period without the energy transfer diodes 30, 31, 32. A first time period 59 shows a period of time with a set voltage level. The second time period 60 shows a low resistance or short circuit occurring at the output of the multilevel DC power supply 2, caused e.g., by an arc in the plasma chamber 3. After the second time period 60, a third period 61 is shown in which strong oscillations and overvoltage spikes 62 occur and deregulate the output voltage. The occurrence of strong oscillations and overvoltage spikes 62 may be caused by overcharging the voltage change limiting capacitors 33, 34, 35, e.g. by a high current flowing in the change limiting inductances 27, 28, 29, which was cut off, when the short circuit was detected and is still running, when power is delivered back to the first and second DC power supply output connections 71, 72. The fourth time period 59 shows a return to the set voltage level.

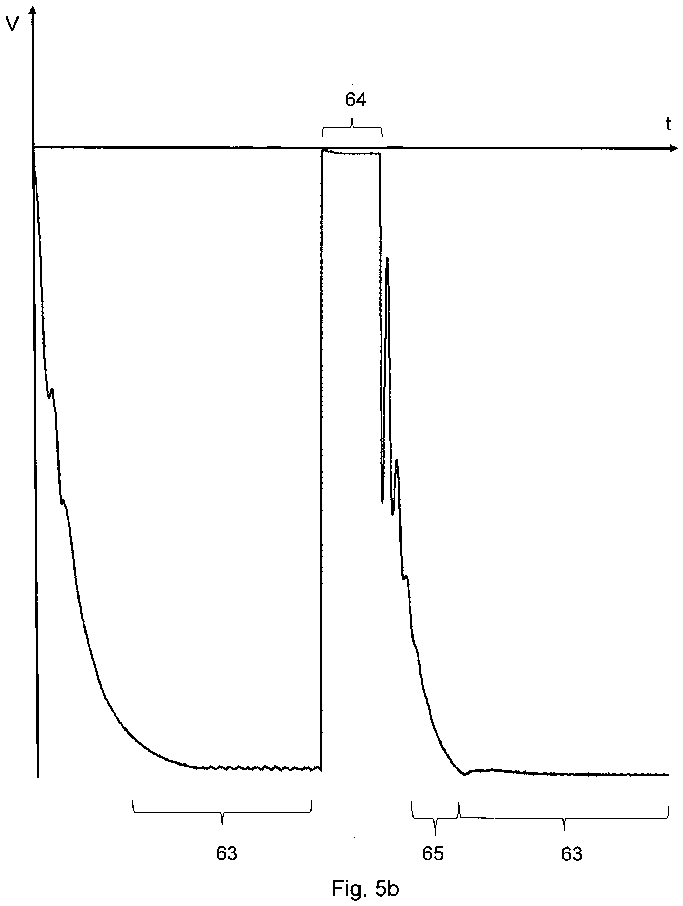

Fig. 5b shows a waveform of output voltage in time period on an output of a multilevel DC power supply 2 with the energy transfer diodes 30, 31, 32. This output waveform, in the first time period 63, shows a set voltage level as in the first time period 59 of Fig. 5a. The second time period 64 shows a low resistance or short circuit occurring at the output of the multilevel DC power supply 2, caused e.g., by an arc in the plasma chamber 3. This is similar as in the second time period 60 of Fig. 5a. In the third time period 65, the oscillations occurring after a short circuit time period 64 are significantly reduced. Oscillations have a much lower amplitude and lifespan due to the use of a multilevel DC power supply 2 built as described in Fig. 3a to Fig. 3d. This is a big advantage. The fourth time period 63 shows a return to the set voltage level as in Fig 5a.

In the Fig. 3a and 3b, if second switching element 18, 19, 20 is opened, the corresponding converter module 14, 14', 14" may work together with the respective first switching element 15, 16, 17 as a buck converter. While first switching element 15, 16, 17 is opened, the corresponding converter module 14, 14', 14" may work as a step-up converter. It may then transfer energy from voltage change limiting capacitor 33, 34, 35 to low power generators 12, 12', 12", which may drain out energy.

In Fig. 3c and 3d the situation is similar but vice-versa.

The energy transfer diode 30, 31, 32 may protect voltage change limiting capacitor 33, 34, 35 from charging to a voltage greater than low power generators 12, 12', 12".

In all multilevel DC power supplies as disclosed here and shown e.g., in Fig. 2a to 4b, each LP-generator 12, 12', 12" may have at its output a behavior of an output capacitor. This "behavior of an output capacitor" may have a capacity level which is higher than the capacity of the voltage change limiting capacitor 33, 34, 35 of its respective converter module 14, 14', 14". Which such a configuration, the energy drained from the voltage change limiting capacitor 33, 34, 35 into the respective LP-generator 12, 12', 12" will result in a moderate and acceptable voltage rise at the outputs of the respective LP-generators 12, 12', 12".

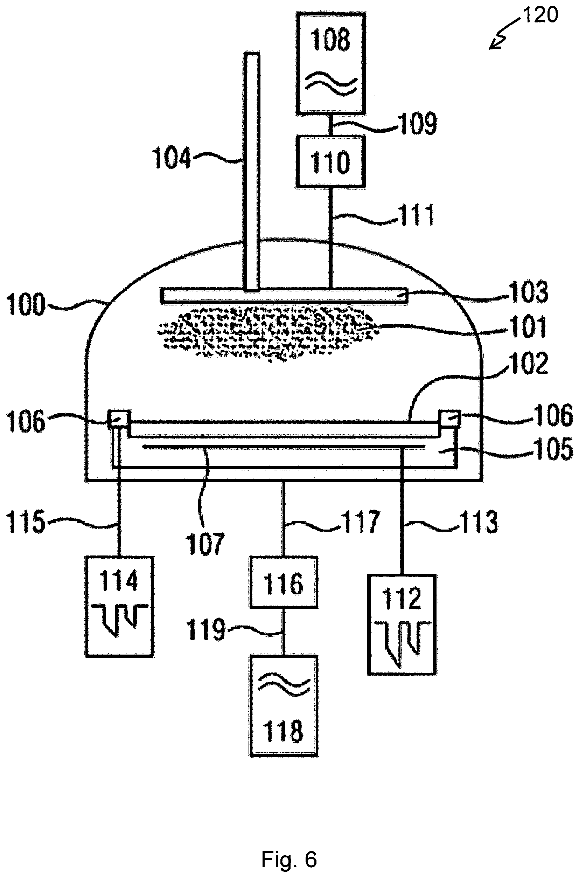

Fig. 6 shows a plasma processing system 120 with a plasma chamber 100 in which a plasma 101 is established in a plasma space. Such or similar systems are shown and described in US 2020 0118794 A1, US 10,474,184 B2, or US 10,607,813 B2 e.g.. In the plasma chamber an upper electrode 103 may be positioned. A gas inlet and/or outlet, in particular a gas supply pipe 104 may be placed from the outside to the inside of the plasma chamber 100, in particular connected to the electrode 103. A substrate 102, in particular a semiconductor wafer may be placed on a support 105 which comprises a substrate holder inside the plasma chamber 100. In use the substrate 102 may be processed by the plasma 101, e.g., in a process of etching, ashing, or deposition in particular with atomic layered deposition. Etching process may be an extremely high challenge, for instance when the ratio between etched hole diameter and hole length is extremely low, < 1/100, e.g., as it is in deep etching often necessary. An electric conductive electrode 106 may be placed in the plasma chamber 100, in particular nearby the substrate 102, for example around the substrate 102. This electric conductive electrode 106 may be an edge ring which may be also called focus ring. This electric conductive electrode 106 may be connected to a first power supply 114 via a first connection line 115. The first power supply 114 may be a DC pulsed power supply, where in particular the pulses may be of different length, different amplitude and shaped as described in US 9,287,086 B2 Fig. 11, 14, or US 10,474,184 B2, Fig. 2 e.g.. With the control of the first power supply 114 the electric conductive electrode 106 may be used additionally or alternatively as an ion energy and/or ion acceleration direction control as also described in US 9,287,086 B2 or US 10,474,184 B2. A first radio-frequency (RF) power supply 118 may be electrically connected to the support 105 via a first power feeding rod 119 and a first matching unit 116 and a first connection unit 117. A second radio-frequency (RF) power supply 108 may be electrically connected to the upper electrode 103 via a second power feeding rod 109 and a second matching unit 110 and a second connection unit 111. An electrode 107 may be positioned in or nearby the support 105 and is electrically connected to a second power supply 112 via a second connection line 113. The second power supply 112 may be a DC pulsed power supply, where in particular the pulses may be of different length, different amplitude and shaped as described in US 9,287,086 B2 Fig. 11, 14, or US 10,474,184 B2, Fig. 2 e.g. The substrate 102 may be fixed at the support 105 via the electrode 107 which may work as an electrostatic chuck. With the control of the second power supply 112 the electrode 107 may be used additionally or alternatively as an ion energy and/or ion acceleration direction control as described in US 9,287,086 B2 or US 10,474,184 B2.

Some plasma treatment applications, such as etching or layer deposition, demand a high voltage (HV), high frequency (HF), rectangular, asymmetrical, pulsed voltage supply. Often the voltage values significantly exceed the voltage handling possibilities of individual semiconductor switches, especially when high frequency operation is required.

Some plasma applications require not only pulsing, but pulse-to-pulse amplitude variation. Some plasma applications require the source to deliver high peak currents in order to obtain short voltage transition times. Most plasma applications present a load, which contains a capacitive component. Significant power loss is related to the pulse-by-pulse charging and discharging process of this load capacitance. Some plasma applications require pulse shaping as described in US 9,287,086 B2 Fig. 11, 14, or US 10,474,184 B2, Fig. 2, e.g.

Therefore, a series connection of such switches is one possible solution. Series connection requires voltage balancing means. These voltage balancing means are not easily realisable in HF operation.

The first power supply 114 and/or the second power supply 112 may be arranged as a HP-HV-pulsed power supply 1 as described above, and, e.g., in connection with the figures 1a - 1d.

## Claims

1. Multilevel DC power supply (2) comprising:
• a first DC power supply output connection (71),
• a second DC power supply output connection (72),
• several low power generators (12, 12', 12");
• several switching units (13, 13', 13"), and
• several converter modules (14, 14', 14"), wherein
• each switching unit (13, 13', 13") is assigned to one of the low power generators (12, 12', 12"), and comprises:
• a positive input connection (39, 40, 41), connected to the assigned low power generator (12, 12', 12"), respectively,
• a negative input connection (42, 43, 44), connected to the assigned low power generator (12, 12', 12"), respectively,
• a first switching element (15, 16, 17) and a second switching element (18, 19, 20), connected in series between the positive input connection (39, 40, 41) and the negative input connection (42, 43, 44), and building between each other a half bridge connection (45, 46, 47), respectively;
• each converter module (14, 14', 14") is assigned to a switching unit (13, 13', 13"), and connected to the positive input connection (39, 40, 41), the negative input connection (42, 43, 44), and the half bridge connection (45, 46, 47) of its assigned switching unit (13, 13', 13"), wherein every converter module (14, 14', 14") comprises:
• a first converter module output connection (51, 52, 53),
• a second converter module output connection (54, 55, 56),
• a current change limiting inductance (27, 28, 29), and
• a voltage change limiting capacitor (33, 34, 35), connected between the first converter module output connection (51, 52, 53), and the second converter output connection (54, 55, 56), wherein
• each current change limiting inductance (27, 28, 29) and each voltage change limiting capacitor (33, 34, 35) is connected together with its first end in a star point-connection (48, 49, 50), respectively,
• each current change limiting inductance (27, 28, 29) is connected with its respective second end to the half bridge connection (45, 46, 47) of its respective switching unit (13, 13', 13"), and
• the converter modules (14, 14', 14") are connected at their output connections (51, 52, 53, 54, 55, 56) in series, and this converter module series connection is, at its first end, connected to the first DC power supply output connection (71), and, at its second end, connected to the second DC power supply output connection (72).

2. Multilevel DC power supply (2) according to claim 1, wherein every converter module (14, 14', 14") comprises an energy transfer diode (30, 31, 32), wherein each energy transfer diode (30, 31, 32) is connected with its first end to the star point-connection (48, 49, 50) and with its second end to one of the positive input connection (39, 40, 41) or the negative input connection (42, 43, 44) of its respective switching unit (13, 13', 13").

3. Multilevel DC power supply (2) according to any of the preceding claims, wherein each star point-connection (48, 49, 50) is connected to one of the first or the second converter module output connection (51, 52, 53, 54, 55, 56) of its respective converter module (14, 14', 14").

4. Multilevel DC power supply (2) according to any of the preceding claims, wherein the multilevel DC power supply (2) comprises several energy absorbing components, preferably at least one in each switching unit (13, 13', 13") and/or in each converter module (14, 14', 14").
(Could be realised as resistors, combination of inductance and/or capacitor with resistor, giving the diodes or inductances a resistive component.

5. Multilevel DC power supply (2) according to any of the preceding claims, wherein each switching unit (13, 13', 13") comprises a first diode (21, 22, 23) and a second diode (24, 25, 26) connected in series, wherein the connection point of the first diode (21, 22, 23) and second diode (24, 25, 26) is connected to the half bridge connection (45, 46, 47) in the respective switching unit (13, 13', 13").

6. Multilevel DC power supply (2) according to any of the preceding claims, wherein each converter module (14, 14', 14") contains an additional freewheeling diode (36, 37, 38).

7. Multilevel DC power supply (2) according to the preceding claim 6, wherein each freewheeling diode (36, 37, 38) is connected with its respective first end to the star point-connection (48, 49, 50) and, with its respective second end to one of the first converter module output connection (51, 52, 53) or the second converter module output connection (54, 55, 56) of its respective converter module (14, 14', 14").

8. Multilevel DC power supply (2) according to any of the preceding claims, wherein the multilevel DC power supply (2) comprises a heat dissipating component.

9. Multilevel DC power supply (2) according to any of the preceding claims, wherein each LP-generator (12, 12', 12") has at its output a behavior of an output capacitor with a capacity level which is higher than the capacity of the voltage change limiting capacitor (33, 34, 35) of its respective converter module (14, 14', 14").

10. HP-HV-pulsed power supply (1) comprising a multilevel DC power supply (2) according to one of the preceding claims and a pulse unit (10) connected to the outputs of the multilevel DC power supply (2).

11. HP-HV-pulsed power supply (1) according to claim 10, wherein the pulse unit (10) comprises a first pulse unit switching element (4) and a second pulse unit switching element (5).

12. HP-HV-pulsed power supply (1) according to any of the preceding claims 10 - 11, wherein the first pulse unit switching element (4) is connected in series to one input and one output of the pulse unit (10)

13. HP-HV-pulsed power supply (1) according to any of the preceding claims 10 - 12, wherein the second pulse unit switching element (5) connected in parallel to two outputs of the pulse unit (10).

14. Plasma process system (100) comprising a HP-HV-pulsed power supply (1) according to any of the preceding claims 10 - 13, and a plasma chamber (3), configured for plasma processing of a substrate (102), the HP-HV-pulsed power supply (1) connected to the plasma chamber (3) and being configured to deliver pulsed multilevel power to the plasma process.

15. Method for generating multilevel DC power with a multilevel DC power supply (2) according to one of the preceding claims 1 - 9, wherein a first switching unit (13) is controlled with a phase delay compared to a second switching unit (13'. 13").
